# EUROPEAN PATENT APPLICATION

(11) **EP 4 847 238 A1**
(43) Date of publication of application: **02.12.2026**
(21) Application number: 25748332.1
(22) Date of filing: 16.01.2025
(51) Int. Cl.: B29C 70/10, B29C 43/34, B29C 70/42

(54) **METHOD FOR MANUFACTURING MOLDED ARTICLE**

(30) Priority: 02.02.2024 JP 2024015249
(71) Applicant: IHI Corporation, Tokyo 135-8710 (JP)
(72) Inventor: MATSUKURA, Izumi, Tokyo 135-8710 (JP); KOBIKI, Akira, Tokyo 135-8710 (JP); MURATA, Sho, Tokyo 135-8710 (JP)
(74) Representative: MERH-IP Matias Erny Reichl Hoffmann Patentanwälte PartG mbB
(86) International application number: PCT/JP2025/001197
(87) International publication number: WO 2025/164334

(57) **Abstract**

A method of manufacturing a molded body includes: a preparation process of preparing chopped materials that contain reinforcing fibers and are cut out into a predetermined outer shape; an arrangement process of arranging the chopped materials in a mold; and a molding process of obtaining a molded body from the chopped materials arranged in the mold by molding accompanied by heating and pressurization. In the preparation process, the chopped materials are prepared so as to include first chopped materials in which an orientation direction, which is a direction of the reinforcing fibers with reference to the outer shape of the chopped material, is a first direction, and second chopped materials in which the orientation direction is a second direction different from the first direction with reference to the outer shape.

## Description

### Technical Field

The present disclosure relates to a method of manufacturing a molded body.

### Background Art

Patent Literature 1 discloses a fiber-reinforced resin article including a unidirectional fiber-reinforced resin sheet and a plurality of chopped sheets located on at least one surface of the unidirectional fiber-reinforced resin sheet.

### Citation List

### Patent Literature

[Patent Literature 1] Japanese Unexamined Patent Publication No. 2022-173292

### Summary of Invention

### Technical Problem

For example, in order to mold a complex shape using a fiber-reinforced resin, a molding method using chopped materials, which are finely cut prepregs that are sheets obtained by impregnating reinforcing fibers with a resin, may be considered. For example, in a case where the fiber direction of the reinforcing fibers in a chopped material having a square outer shape is parallel to the sides of the square, accidental variation in the distribution of the fiber direction may occur when the chopped materials are laid out in a mold. As a result, variation also occurs in the distribution of the fiber direction in the final molded product, and variation may occur in the mechanical properties of the molded product. A problem may arise in that it becomes difficult to design products using chopped materials, and the applications thereof are limited.

The present disclosure describes a method of manufacturing a molded body that aims to reduce the probability that variation in the mechanical properties of a molded product becomes large due to accidental variation occurring in the distribution of the fiber direction when chopped materials are laid out in a mold.

### Solution to Problem

A method of manufacturing a molded body according to one aspect of the present disclosure includes: a preparation process of preparing chopped materials that contain reinforcing fibers and are cut out into a predetermined outer shape; an arrangement process of arranging the chopped materials in a mold; and a molding process of obtaining a molded body from the chopped materials arranged in the mold by molding accompanied by heating and pressurization, wherein, in the preparation process, the chopped materials are prepared so as to include first chopped materials in which an orientation direction, which is a direction of the reinforcing fibers with reference to the outer shape of the chopped material, is a first direction, and second chopped materials in which the orientation direction is a second direction different from the first direction with reference to the outer shape.

### Advantageous Effects of Invention

According to some aspects of the present disclosure, it is possible to reduce the probability that variation in the mechanical properties of a molded product becomes large due to accidental variation occurring in the distribution of the fiber direction when chopped materials are laid out in a mold.

### Brief Description of Drawings

FIG. 1 is a flowchart illustrating an example of a method of manufacturing a molded body.
FIG. 2 is a plan view illustrating an example of first chopped materials and second chopped materials.
FIG. 3(a), FIG. 3(b), and FIG. 3(c) are views illustrating an example of a preparation process of the method of manufacturing a molded body.
FIG. 4(a), FIG. 4(b), and FIG. 4(c) are views illustrating another example of the preparation process of the method of manufacturing a molded body.
FIG. 5(a) is a view illustrating an example of an arrangement process of the method of manufacturing a molded body. FIG. 5(b) is a view illustrating an example of a molding process of the method of manufacturing a molded body. FIG. 5(c) is a view illustrating an example of a molded body obtained by the method of manufacturing a molded body.
FIG. 6(a) is a plan view illustrating an example of test pieces cut out from a molded body obtained by the method of manufacturing a molded body. FIG. 6(b) is a schematic view illustrating an in-plane tensile test using the test pieces.
FIG. 7 is a view illustrating the mean value and coefficient of variation of relative tensile strength based on the results of the in-plane tensile test.
FIG. 8 is a view illustrating the mean value and coefficient of variation of relative elastic modulus based on the results of the in-plane tensile test.
FIG. 9(a) and FIG. 9(b) are plan views illustrating examples of chopped materials having a specific outer shape that are prepared such that the orientation direction, which is the direction of the reinforcing fibers with reference to the outer shape of the chopped material, is of a single type.

### Description of Embodiments

A method of manufacturing a molded body according to one aspect of the present disclosure includes: a preparation process of preparing chopped materials that contain reinforcing fibers and are cut out into a predetermined outer shape; an arrangement process of arranging the chopped materials in a mold; and a molding process of obtaining a molded body from the chopped materials arranged in the mold by molding accompanied by heating and pressurization, wherein, in the preparation process, the chopped materials are prepared so as to include first chopped materials in which an orientation direction, which is a direction of the reinforcing fibers with reference to the outer shape of the chopped material, is a first direction, and second chopped materials in which the orientation direction is a second direction different from the first direction with reference to the outer shape.

In the method of manufacturing a molded body according to one aspect of the present disclosure, the chopped materials prepared in the preparation process include the first chopped materials and the second chopped materials. The orientation direction, which is the direction of the reinforcing fibers with reference to the outer shape of the chopped material, is the first direction for the first chopped materials and is the second direction, which is different from the first direction, for the second chopped materials. This makes it less likely that accidental variation in the distribution of the fiber direction occurs when the first chopped materials and the second chopped materials are laid out in a mold. Therefore, it is possible to reduce the probability that variation in the mechanical properties of a molded product becomes large due to accidental variation occurring in the distribution of the fiber direction when the chopped materials are laid out in a mold.

In some aspects, the outer shape may be square or rectangular, and in the arrangement process, the chopped materials may be arranged in the mold with a ratio of the first chopped materials to the second chopped materials being approximately 1:1. In this case, chopped materials having a square or rectangular outer shape can be used as the first chopped materials and the second chopped materials for which accidental variation in the distribution of the fiber direction is less likely to occur when laid out in the mold.

In some aspects, the outer shape may be square, and a lower limit of a length of one side of the square may be 5 mm. As the length of one side of the square of the chopped materials becomes larger, there is a tendency that a phenomenon in which the fiber direction accidentally deviates in a specific direction when the chopped materials are laid out in a mold is more likely to occur over a wider range within the mold. Therefore, by targeting chopped materials in which the lower limit of the length of one side of the square is 5 mm, the above-described phenomenon can be effectively suppressed.

In some aspects, in the preparation process, the chopped materials may be prepared by cutting out, into the predetermined outer shape, a laminated prepreg in which a plurality of prepregs are laminated so as to include a plurality of orientation directions. In this case, since the chopped materials are prepared using the laminated prepreg, the first chopped materials and the second chopped materials can be cut out efficiently.

In some aspects, in the preparation process, the chopped materials may be prepared by cutting out a scrap material of a prepreg into the predetermined outer shape. In this case, effective utilization of the scrap material of the prepreg can be achieved.

A method of manufacturing a molded body according to another aspect of the present disclosure includes: a preparation process of preparing chopped materials that contain reinforcing fibers and are cut out into a predetermined outer shape; an arrangement process of arranging the chopped materials in a mold; and a molding process of obtaining a molded body from the chopped materials arranged in the mold by molding accompanied by heating and pressurization, wherein the outer shape is a shape that includes an acute angle portion, an obtuse angle portion, or a circular arc portion, and that excludes parallelograms other than a rhombus, and wherein in the preparation process, the chopped materials are prepared such that an orientation direction, which is a direction of the reinforcing fibers with reference to the outer shape of the chopped material, is of a single type.

In the method of manufacturing a molded body according to another aspect of the present disclosure, the chopped materials prepared in the preparation process have an orientation direction, which is the direction of the reinforcing fibers with reference to the outer shape of the chopped material, of a single type. The outer shape of the chopped materials is a shape that includes an acute angle portion, an obtuse angle portion, or a circular arc portion, and that excludes parallelograms other than a rhombus. This makes it easier for the direction of the reinforcing fibers with reference to the mold to take a plurality of different directions depending on the orientation of the acute angle portion, the obtuse angle portion, or the circular arc portion with respect to the mold. Therefore, it becomes less likely that accidental variation in the distribution of the fiber direction occurs when the chopped materials are laid out in a mold. Accordingly, it is possible to reduce the probability that variation in the mechanical properties of a molded product becomes large due to accidental variation occurring in the distribution of the fiber direction when the chopped materials are laid out in a mold.

Hereinafter, embodiments for carrying out the present disclosure will be described in detail with reference to the accompanying drawings. In the description of the drawings, the same elements are given the same reference signs, and a repeated description is omitted.

The method of manufacturing a molded body according to the present embodiment is a method of manufacturing a molded body by obtaining a molded body from an object to be molded by molding accompanied by heating and pressurization, using chopped materials that contain reinforcing fibers and are cut out into a predetermined outer shape. An example of the method of manufacturing a molded body is a molding process using a prepreg as an intermediate base material for carbon fibers. By using chopped materials of a prepreg, the high fiber volume content of the prepreg can be inherited, making it easy to obtain high mechanical properties, and the formability and moldability are excellent despite the relatively long fiber length. Examples of molded bodies obtained by such a method of manufacturing a molded body include CFRP [Carbon Fiber Reinforced Plastics]. Such molded bodies can be applied to, for example, aircraft parts and the like.

A prepreg is obtained by impregnating fibers with a matrix material. The matrix material used here is, for example, a thermoplastic resin. As the thermoplastic resin, at least one of polyether ether ketone, polyimide, polyetherimide, polyamide, polycarbonate, polyphenylene sulfide, and the like can be used. The reinforcing material used here is, for example, carbon fibers.

A molding method for obtaining a molded body using chopped materials of a thermoplastic prepreg is also referred to as the CTT (Chopped fiber Tape reinforced Thermoplastics) method. CTT refers to a carbon fiber tape-reinforced thermoplastic resin molded body. As an example of the CTT method, there is the BMC-CTT method, which is similar to BMC (Bulk Molding Compound). The BMC-CTT method is a method of preparing chopped materials cut out from a thermoplastic prepreg, weighing and laying them out in a mold, and molding by heating and pressurization to obtain a molded body. As another example of the CTT method, there is the SMC-CTT method, which is a type of SMC (Sheet Molding Compound). The SMC-CTT method is a method of forming chopped materials cut out from a thermoplastic prepreg into a sheet, weighing and laminating the cut sheets while charging and arranging them in a mold, and molding by heating and pressurization to obtain a molded body. The method of manufacturing a molded body according to the present embodiment can be applied to both the BMC-CTT method and the SMC-CTT method. Hereinafter, the method of manufacturing a molded body according to the present embodiment will be described using the BMC-CTT method as an example.

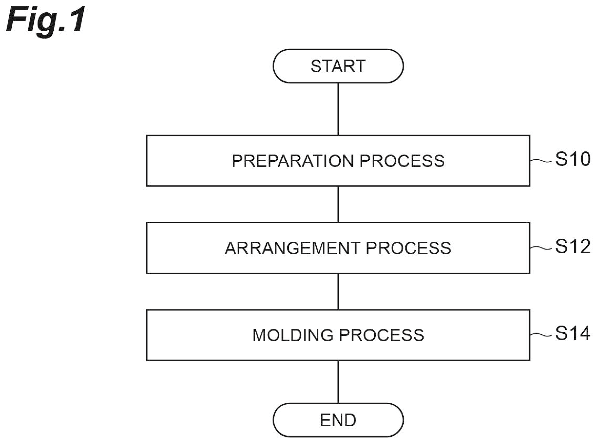

With reference to FIGS. 1 to 5(c), the procedure of the method of manufacturing a molded body according to the present embodiment will be described. FIG. 1 is a flowchart illustrating an example of the method of manufacturing a molded body. As illustrated in FIG. 1, as step S10, a preparation process is performed. In the preparation process, chopped materials that contain reinforcing fibers and are cut out into a predetermined outer shape are prepared by cutting a prepreg.

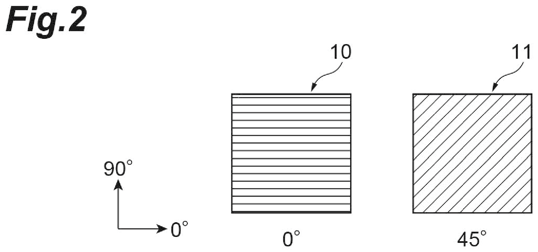

In the preparation process, as an example, the chopped materials are prepared so as to include first chopped materials in which an orientation direction, which is a direction of the reinforcing fibers with reference to the outer shape of the chopped material, is a first direction, and second chopped materials in which the orientation direction is a second direction different from the first direction with reference to the outer shape. FIG. 2 is a plan view illustrating an example of the first chopped materials and the second chopped materials. As illustrated in FIG. 2, the predetermined outer shape of the chopped materials may be square or rectangular. In FIG. 2, the hatching applied to the squares represents the direction of the reinforcing fibers.

The orientation direction is the direction of the reinforcing fibers with reference to the outer shape of the chopped material. "The direction of the reinforcing fibers with reference to the outer shape of the chopped material" means the extending direction of the reinforcing fibers with reference to the extending direction of one side of the outer shape of the chopped material. The orientation direction can be expressed as the angle formed between the extending direction of one side of the outer shape of the chopped material and the extending direction of the reinforcing fibers. The "one side of the outer shape of the chopped material" in the orientation direction is not particularly limited, but may be, for example, one side along the longitudinal direction of a sheet-shaped prepreg drawn out from a roll.

In the example of FIG. 2, the orientation direction is the angle formed between one of the four sides of the square, specifically the side at the bottom of the page, and the extending direction of the reinforcing fibers, and 0° and 45° are illustrated. For example, when comparing a chopped material 10 with an orientation direction of 0° and a chopped material obtained by rotating it 90° (not illustrated), the outer shapes match and the directions of the reinforcing fibers appear to differ by the rotated angle (here, 90°). In this case, the orientation direction is not treated separately as 0° and 90°, but is treated as a single type of "0°". Similarly, when comparing a chopped material 11 with an orientation direction of 45° and a chopped material obtained by rotating it 90° (not illustrated), the orientation direction is not treated separately as 45° and 135°, but is treated as a single type of "45°". That is, when the outer shapes match in a comparison between before and after rotating a chopped material, the orientation direction with the smaller absolute value of the angle represents both the orientation direction before rotation and the orientation direction after rotation. It should be noted that while the comparison between before and after rotating a chopped material has been exemplified as rotation within the same plane, the same treatment can be applied to a comparison between before and after turning a chopped material over.

In the example of FIG. 2, the orientation direction of the chopped material 10 (first chopped material) is, for example, the 0° direction (first direction) with reference to one of the four sides of the square, specifically the side at the bottom of the page. The orientation direction of the chopped material 11 (second chopped material) is, for example, the 45° direction (second direction) with reference to one of the four sides of the square, specifically the side at the bottom of the page. The orientation direction of the chopped material 10 is different from the orientation direction of the chopped material 11.

The dimensions of the chopped materials can be selected according to the mechanical properties required of the molded product. This is because the fiber length in the chopped material is determined according to the dimensions of the chopped material. For the chopped materials 10 and 11, the lower limit of the length of one side of the square may be 5 mm. As the length of one side of the square of the chopped materials 10 and 11, for example, 5 mm, 10 mm, 15 mm, and the like can be selected. The upper limit of the dimensions of the chopped materials can be determined by physical constraints such as the dimensions of the molded product or the mold.

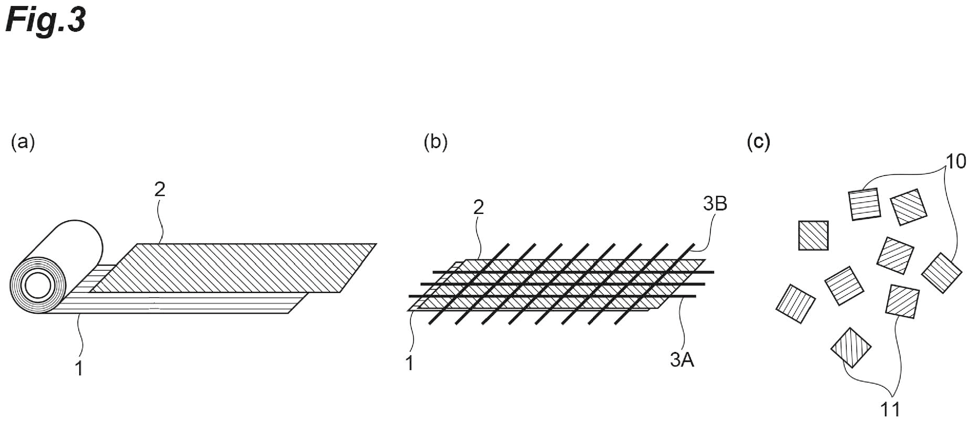

FIG. 3(a), FIG. 3(b), and FIG. 3(c) are views illustrating an example of the preparation process of the method of manufacturing a molded body. In the preparation process of FIG. 3(a), FIG. 3(b), and FIG. 3(c), the chopped materials 10 and 11 are prepared by cutting out sheet-shaped prepregs laminated with different reinforcing fiber directions in a single cutting direction so as to have the predetermined outer shape.

As illustrated in FIG. 3(a), for example, sheet-shaped prepregs 1 and 2 are used, and the prepregs 1 and 2 are laminated so as to have different reinforcing fiber directions. The prepreg 1, in the state of being drawn out from a roll, has the reinforcing fiber direction along the 0° direction with respect to the longitudinal direction. The prepreg 2 has the reinforcing fiber direction along the 45° direction with respect to the longitudinal direction. These prepregs 1 and 2 are laminated with their longitudinal directions aligned with each other.

Next, as illustrated in FIG. 3(b), the laminated prepregs 1 and 2 are cut out in a single cutting direction so as to have the predetermined outer shape. The single cutting direction means that the extending direction of the blade corresponding to the predetermined outer shape is not rotated with respect to the prepreg in a plan view. With the single cutting direction, since the orientation of the predetermined outer shape with respect to the prepreg does not rotate in a plan view, the orientation direction of the chopped material becomes a direction corresponding to the reinforcing fiber direction of each prepreg.

In the example of FIG. 3(b), with respect to the prepregs 1 and 2 laminated with their longitudinal directions aligned, a blade 3A in a direction parallel to the longitudinal direction of the prepregs 1 and 2 and a blade 3B in a direction orthogonal to the longitudinal direction of the prepregs 1 and 2 are used to cut out a square with the above-described side length as the predetermined outer shape. The directions of the blades 3A and 3B are not rotated with respect to the prepreg in a plan view. The cutting of the prepregs 1 and 2 by the blades 3A and 3B may be performed sequentially for each single cut line, or may be performed simultaneously with a plurality of cut lines. As a result, as illustrated in FIG. 3(c), the chopped material 10 with an orientation direction of 0° and the chopped material 11 with an orientation direction of 45° are obtained. It should be noted that instead of cutting the prepregs 1 and 2 with the blades 3A and 3B, the chopped materials 10 and 11 may be obtained by using, for example, a shredder configured to cut in a similar manner.

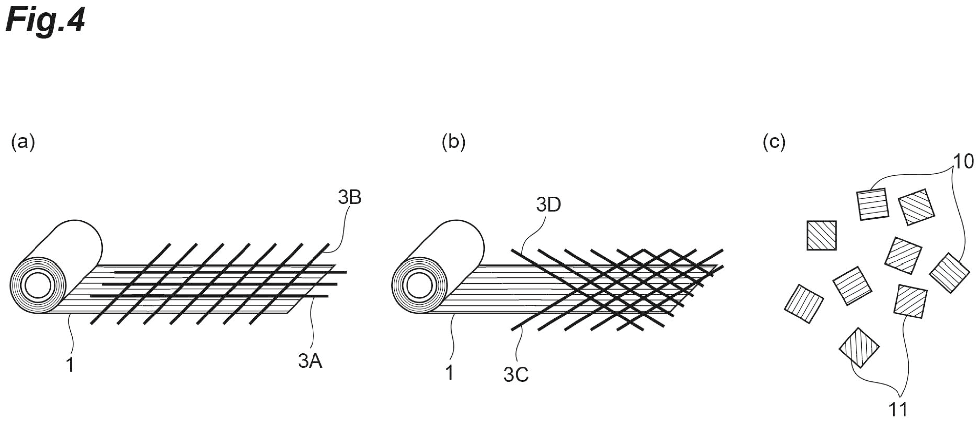

FIG. 4(a), FIG. 4(b), and FIG. 4(c) are views illustrating another example of the preparation process of the method of manufacturing a molded body. In the preparation process of FIG. 4(a), FIG. 4(b), and FIG. 4(c), a sheet-shaped prepreg having a single reinforcing fiber direction is cut out in a plurality of types of cutting directions so as to have the predetermined outer shape, thereby preparing chopped materials 10 with an orientation direction in the first direction and chopped materials 11 with an orientation direction in the second direction.

As illustrated in FIG. 4(a), for example, a sheet-shaped prepreg 1 drawn out from a roll is used. The prepreg 1, in the state of being drawn out from a roll, has the reinforcing fiber direction along the 0° direction with respect to the longitudinal direction. The prepreg 1, in the state of being drawn out from a roll, is a sheet-shaped prepreg having a single reinforcing fiber direction.

In the example of FIG. 4(a), the prepreg 1 having a single reinforcing fiber direction is cut out in a first cutting direction. The first cutting direction means the extending direction of the blade corresponding to the predetermined outer shape set with respect to the prepreg in a plan view such that the orientation direction becomes the first direction. For example, with respect to the prepreg 1 having a single reinforcing fiber direction, a blade 3A in a direction parallel to the longitudinal direction of the prepreg 1 and a blade 3B in a direction orthogonal to the longitudinal direction of the prepreg 1 are used to cut out a square with the above-described side length as the predetermined outer shape. The cutting of the prepreg 1 by the blades 3A and 3B may be performed sequentially for each single cut line, or may be performed simultaneously with a plurality of cut lines. As a result, as illustrated in FIG. 4(c), chopped materials 10 with an orientation direction of 0°are obtained.

In the example of FIG. 4(b), the prepreg 1 having a single reinforcing fiber direction is cut out in a second cutting direction. The second cutting direction means the extending direction of the blade corresponding to the predetermined outer shape set with respect to the prepreg in a plan view such that the orientation direction becomes the second direction. The directions of blades 3C and 3D in FIG. 4(b) are directions obtained by rotating the directions of the blades 3A and 3B in FIG. 4(a) by 45° with respect to the prepreg 1 in a plan view. For example, with respect to the prepreg 1 having a single reinforcing fiber direction, a blade 3C in the 45° direction with respect to the longitudinal direction of the prepreg 1 and a blade 3D in the 135° direction with respect to the longitudinal direction of the prepreg 1 are used to cut out a square with the above-described side length as the predetermined outer shape. The cutting of the prepreg 1 by the blades 3C and 3D may be performed sequentially for each single cut line, or may be performed simultaneously with a plurality of cut lines. As a result, as illustrated in FIG. 4(c), chopped materials 11 with an orientation direction of 45°are obtained.

In the preparation process, instead of directly cutting out a sheet-shaped prepreg drawn out from a roll, the chopped materials may be prepared by cutting out a scrap material of the sheet-shaped prepreg drawn out from a roll. It should be noted that in the preparation process, drawing out from a roll is not essential, and for example, a sheet-shaped prepreg that has already been cut out may be obtained and used. The scrap material of the prepreg is, for example, the portion remaining after a portion for manufacturing another molded body has been cut out from a sheet-shaped prepreg drawn out from a roll. The scrap material of the prepreg may be, for example, a die-cut material. The die-cut material is, for example, a member having a shape corresponding to the outer shape in a plan view of another molded body, and is a member for constituting a pre-molding laminate by laminating a plurality of die-cut materials. The scrap material of the prepreg may also be the portion remaining after a portion for manufacturing another molded body has been cut out from a sheet-shaped prepreg drawn out from a roll using scissors or the like. By preparing chopped materials from the scrap material of the prepreg, the portion remaining after another die-cut material has been cut out is recycled rather than discarded, and the scrap material of the prepreg can be effectively utilized. The scrap material of the sheet-shaped prepreg drawn out from a roll used here is a scrap material of a laminated prepreg in which a plurality of prepregs 1 and 2 are laminated so as to include a plurality of orientation directions, such as the above-described prepregs 1 and 2. This makes it possible to cut out the chopped materials 10 and 11 including a plurality of orientation directions from the scrap material of the laminated prepreg. It should be noted that the scrap material of the prepreg may be the portion remaining after a portion for manufacturing another molded body has been cut out from a single sheet-shaped prepreg that is not laminated.

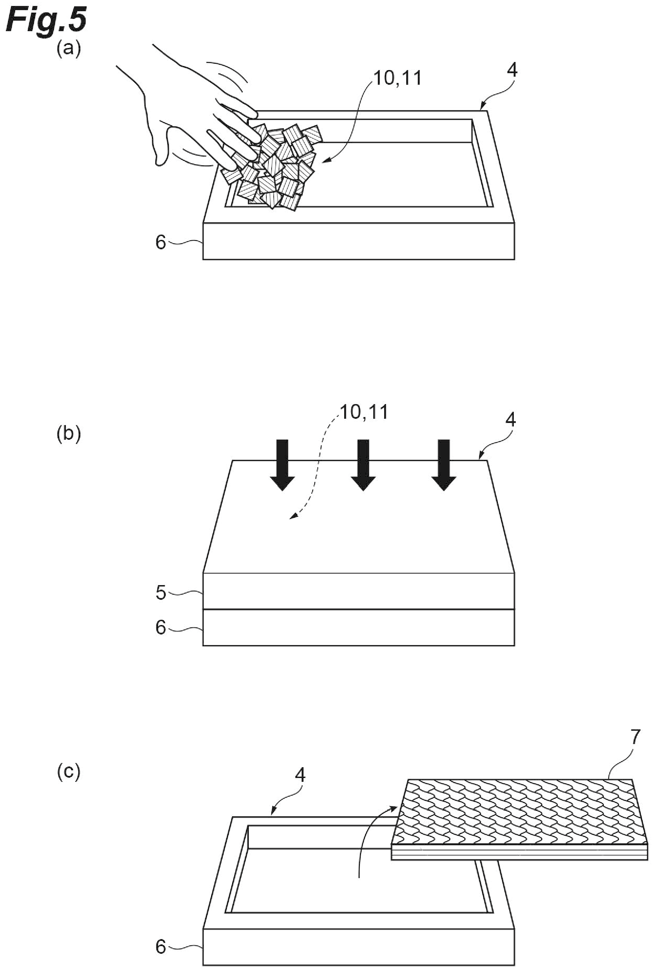

As illustrated in FIGS. 1 and 5(a), as step S12, an arrangement process of arranging the chopped materials in a mold is performed. In the arrangement process, the chopped materials 10 and 11 are weighed and laid out in a mold 4. In the arrangement process, for example, the chopped materials 10 and 11 may be arranged in the mold 4 with a ratio of the chopped materials 10 to the chopped materials 11 being approximately 1:1, and the chopped materials 10 and 11 may be spread out by hand and laid out in the mold 4. As a result, the chopped materials 10 and 11 become a pre-molding laminate. It should be noted that "being the ratio of the chopped materials 10 to the chopped materials 11 approximately 1:1" may mean being the weight ratio of the chopped materials 10 to the chopped materials 11 approximately equal, or may mean being the volume ratio of the chopped materials 10 to the chopped materials 11 approximately 1:1.

As illustrated in FIGS. 1, 5(b), and 5(c), as step S14, a molding process of obtaining a molded body 7 from the chopped materials 10 and 11 is performed. In the molding process, the molded body 7 is obtained from the chopped materials 10 and 11 arranged in the mold 4 by molding accompanied by heating and pressurization (for example, press molding). In the molding process, for example, the molded body 7 is formed by sandwiching the pre-molding laminate between a preheated upper mold 5 and lower mold 6 and performing press molding. The molded body 7 obtained by the method of manufacturing a molded body is subjected to machining (trimming, etc.) and painting, etc., as necessary. In the molding process, preheating of the mold 4 is not essential.

Here, for example, in a case where the fiber direction of the reinforcing fibers in a chopped material having a square outer shape is parallel to the sides of the square, accidental variation in the distribution of the fiber direction may occur when the chopped materials are laid out in a mold. As a result, variation also occurs in the distribution of the fiber direction in the final molded product, and variation may occur in the mechanical properties (for example, strength and elastic modulus) of the molded product. A problem may arise in that it becomes difficult to design products using chopped materials, and the applications thereof are limited. In order to make the fiber orientation distribution of the pre-molding laminate an intended distribution, measures for controlling the initial arrangement of the chopped materials in the mold can be considered, such as automatically loading and arranging the chopped materials in the mold using a mechanical device or the like, or manually adjusting the distribution of the fiber direction using a jig or the like. However, there are problems such as an increase in the cost of introducing mechanical devices and an increase in the time required to produce the pre-molding laminate, leading to an increase in cycle time.

In this regard, according to the method of manufacturing a molded body as described above, the chopped materials prepared in the preparation process include the chopped materials 10 and the chopped materials 11. The orientation direction, which is the direction of the reinforcing fibers with reference to the outer shape of the chopped materials 10 and 11, is the 0° direction (first direction) with reference to one of the four sides of the square, specifically the side at the bottom of the page, for the chopped materials 10, and is the 45° direction (second direction different from the first direction) with reference to one of the four sides of the square, specifically the side at the bottom of the page, for the chopped materials 11. This makes it less likely that accidental variation in the distribution of the fiber direction occurs when the chopped materials 10 and 11 are laid out in a mold.

For example, when the chopped materials 10 and 11 are laid out in the mold 4, there is a possibility that the sides of the outer shape of the chopped materials 10 and 11 become oriented along the inner wall surface of the mold 4, or that the sides of the outer shape of the chopped materials 10 and 11 come into contact with each other inside the mold 4 and their orientations become aligned. Even if such behavior of the chopped materials 10 and 11 occurs, for example, if the orientation directions of adjacent chopped materials 10 and 11 are the 0° direction and the 45° direction, the bias in the direction of the reinforcing fibers is reduced compared to a case where the orientation directions of adjacent chopped materials are the same. Therefore, it is possible to reduce the probability that variation in the mechanical properties (for example, strength and elastic modulus) of a molded product becomes large due to accidental variation occurring in the distribution of the fiber direction when the chopped materials 10 and 11 are laid out in a mold.

In addition, for example, it is possible to eliminate the need to introduce a mechanical device or the like for controlling the initial arrangement of the chopped materials 10 and 11 in the mold 4 so as to suppress accidental variation in the distribution of the fiber direction when the chopped materials 10 and 11 are laid out in the mold. It is possible to prevent the distribution of the reinforcing fiber directions from being biased in a specific direction while maintaining the aspect ratio of the outer shape of the chopped materials 10 and 11 (for example, maintaining a square shape).

In the above-described method of manufacturing a molded body, the outer shape of the chopped materials 10 and 11 is square or rectangular, and in the arrangement process, the chopped materials 10 and 11 are arranged in the mold with the ratio of the chopped materials 10 to 11 being approximately 1:1. This allows the chopped materials 10 and 11 having a square or rectangular outer shape to be used as chopped materials for which accidental variation in the distribution of the fiber direction is less likely to occur when laid out in the mold 4.

In the above-described method of manufacturing a molded body, the outer shape of the chopped materials 10 and 11 is square, and the lower limit of the length of one side of the square is 5 mm. As the length of one side of the square of the chopped materials 10 and 11 becomes larger, there is a tendency that a phenomenon in which the fiber direction accidentally deviates in a specific direction when the chopped materials 10 and 11 are laid out in a mold is more likely to occur over a wider range within the mold. Therefore, by targeting the chopped materials 10 and 11 in which the lower limit of the length of one side of the square is 5 mm, the above-described phenomenon can be effectively suppressed.

Incidentally, as the dimensions of the chopped materials become larger, the fiber length in the chopped materials can be made longer. Therefore, it becomes easier to improve the mechanical properties (for example, tensile strength) of the molded product. However, as the dimensions of the chopped materials become larger, there is a tendency that a phenomenon in which the fiber direction accidentally deviates in a specific direction when the chopped materials are laid out in a mold is more likely to occur over a wider range within the mold. Therefore, by applying the method of manufacturing a molded body of the present disclosure, the increase in variation in the distribution of the fiber direction is suppressed, making the above-described phenomenon less likely to occur. As a result, there is more room to increase the dimensions of the chopped materials, making it easier to improve the mechanical properties of the molded product.

In the above-described method of manufacturing a molded body, in the preparation process, the chopped materials are prepared by cutting out, into the predetermined outer shape, a laminated prepreg in which a plurality of prepregs are laminated so as to include a plurality of orientation directions. This allows the chopped materials to be prepared using the laminated prepreg, so that the chopped materials 10 and 11 can be cut out efficiently.

In the above-described method of manufacturing a molded body, in the preparation process, the chopped materials 10 and 11 may be prepared by cutting out a scrap material of a prepreg into the predetermined outer shape. In this case, effective utilization of the scrap material of the prepreg can be achieved.

Next, the operational effects of the method of manufacturing a molded body according to the present embodiment will be further described while presenting examples, but the method of manufacturing a molded body according to the present disclosure is not limited to the following examples.

### [Examples]

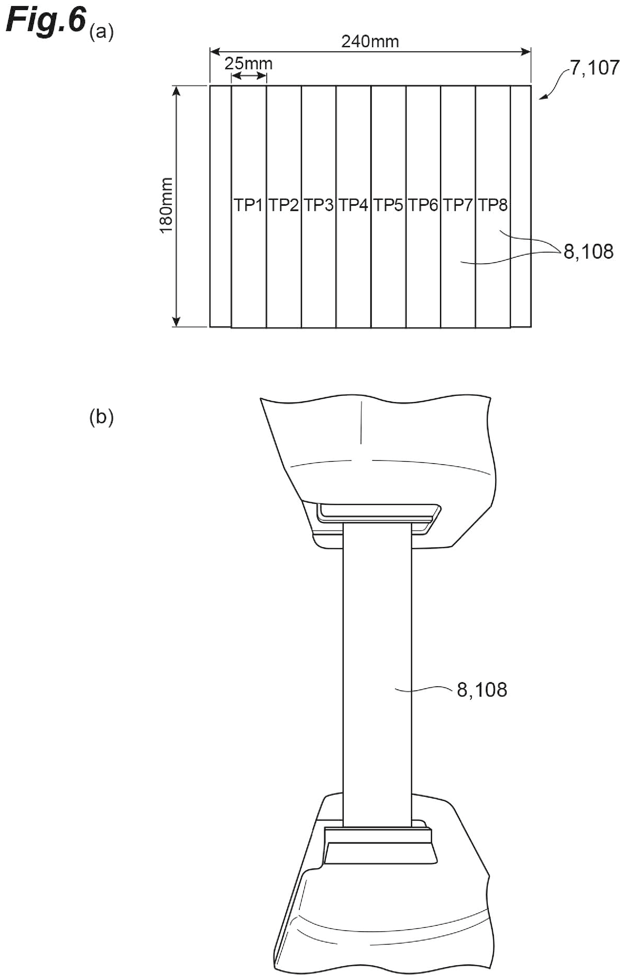

FIG. 6(a) is a plan view illustrating an example of test pieces cut out from a molded body obtained by the method of manufacturing a molded body. FIG. 6(b) is a schematic view illustrating an in-plane tensile test using the test pieces. In the examples, CFRP test pieces as illustrated in FIG. 6(a) were produced. The test pieces are specimens for evaluating the mechanical properties (elastic modulus and tensile strength) of the molded body manufactured by the above-described method of manufacturing a molded body.

Scrap materials of a laminated prepreg consisting of a total of four layers in which prepregs having the reinforcing fiber direction along the 0° direction with respect to the longitudinal direction and prepregs having the reinforcing fiber direction along the 45° direction with respect to the longitudinal direction were alternately stacked were used, and square first chopped materials and second chopped materials were cut out as the predetermined outer shape. It should be noted that the laminated prepreg for cutting out the first chopped materials and the second chopped materials need not be a scrap material. The orientation direction of the first chopped materials was the 0° direction, and the orientation direction of the second chopped materials was the 45° direction. The direction and spacing of the blades were set such that the length of one side of the square was 5 mm in Example 1, 10 mm in Example 2, and 15 mm in Example 3. The cut materials were sieved according to the side length of the square to extract squares of the corresponding side length, and small fragments and the like other than these were separated. At this time, chopped materials that remained stacked in two or more layers were removed. It should be noted that portions containing approximately equal amounts of prepregs with an orientation direction of 0° and prepregs with an orientation direction of 45° were used to cut out the first chopped materials and the second chopped materials from the laminated prepreg.

The first chopped materials and the second chopped materials were weighed, the first chopped materials and the second chopped materials were arranged in a mold, and the first chopped materials and the second chopped materials were spread out by hand and laid out in the mold to form a pre-molding laminate. The first chopped materials and the second chopped materials arranged in the mold were sandwiched between a preheated upper mold and lower mold and subjected to press molding accompanied by heating and pressurization, and after cooling, the molded body was demolded to obtain a molded body 7 with a thickness of 2 mm.

As illustrated in FIG. 6(a), eight test pieces 8 with a width of 25 mm, a length of 180 mm, and a thickness of 2 mm were cut out from the molded body 7. For each of Examples 1 to 3, 16 test pieces 8 were cut out from two molded bodies 7. For each of Examples 1 to 3, an in-plane tensile test of pulling the test piece 8 in the longitudinal direction was performed as illustrated in FIG. 6(b).

As Comparative Examples 1 to 3, molded bodies 107 were produced in the same manner as Examples 1 to 3 except that the second chopped materials were not used and only the first chopped materials were used, and 16 test pieces 108 were cut out from two molded bodies 107. Example 1 and Comparative Example 1 had a square side length of 5 mm, Example 2 and Comparative Example 2 had a square side length of 10 mm, and Example 3 and Comparative Example 3 had a square side length of 15 mm. For each of Comparative Examples 1 to 3, an in-plane tensile test of pulling the test piece 108 in the longitudinal direction was performed as illustrated in FIG. 6(b).

In the in-plane tensile test, the elastic modulus and tensile strength were calculated from measured values such as load and strain for the test pieces 8 and 108 of chopped materials of the same size as each other. For each of Examples 1 to 3, the mean values of the relative elastic modulus and relative tensile strength and the coefficients of variation of the relative elastic modulus and relative tensile strength for the 16 test pieces 8 were determined. For each of Comparative Examples 1 to 3, the mean values of the relative elastic modulus and relative tensile strength and the coefficients of variation of the relative elastic modulus and relative tensile strength for the 16 test pieces 108 were determined.

It should be noted that the elastic modulus was determined as the slope obtained by linear approximation of the interval where the strain was from 0.1% to 0.3% on a graph with the vertical axis representing tensile stress and the horizontal axis representing strain. The tensile strength was taken as the maximum value of the tensile stress. The tensile stress was the value obtained by dividing the tensile load (testing machine load) of the tensile testing machine by the initial cross-sectional area of the test piece. The strain was the value obtained by dividing the elongation between gauge points measured with a video extensometer (gauge length: 50 mm) by the initial value of the gauge length. The coefficient of variation [%] of the relative tensile strength was determined by dividing the standard deviation of the tensile strength [MPa] by the mean value of the tensile strength [MPa] and multiplying by 100. The coefficient of variation [%] of the relative elastic modulus was determined by dividing the standard deviation of the elastic modulus [GPa] by the mean value of the elastic modulus [GPa] and multiplying by 100.

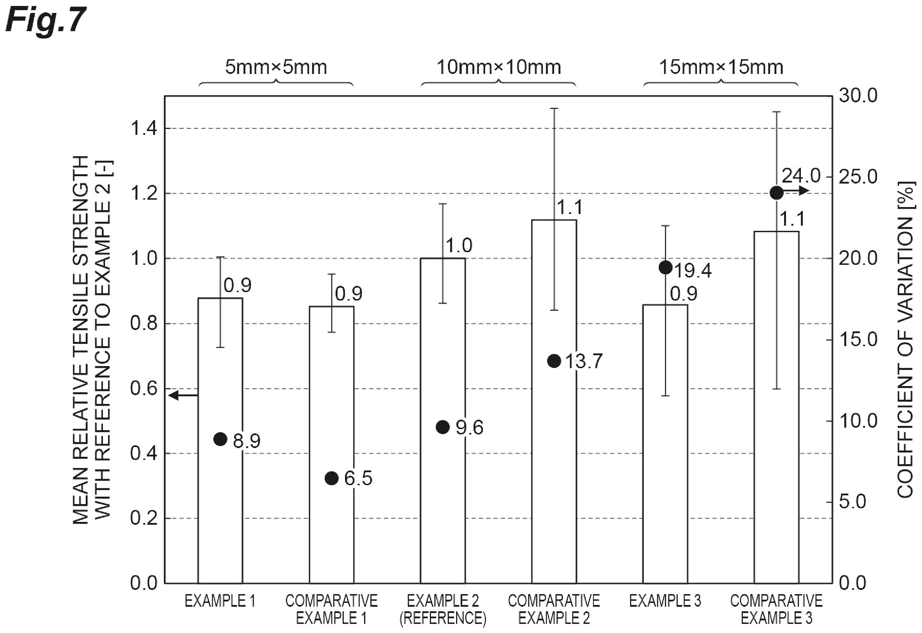

FIG. 7 is a view illustrating the mean value and coefficient of variation of relative tensile strength based on the results of the in-plane tensile test. In FIG. 7, the mean value of the tensile strength (relative tensile strength) with reference to the mean tensile strength value of Example 2 is shown as a bar graph on the left vertical axis, and the coefficient of variation of the relative tensile strength is shown as a plot on the right vertical axis. In FIG. 7, the error bars for the examples and comparative examples show the maximum value of the relative tensile strength at the upper end and the minimum value of the relative tensile strength at the lower end, respectively.

In FIG. 7, when comparing the coefficients of variation of the relative tensile strength between Example 2 and Comparative Example 2, and between Example 3 and Comparative Example 3, that of Example 2 was smaller than that of Comparative Example 2, and that of Example 3 was smaller than that of Comparative Example 3. From this, it was found that by mixing chopped materials with orientation directions of 0° and 45°, the variation in tensile strength is reduced. The reason for this is presumed to be that, for example, even if the sides of the outer shape of the chopped materials become oriented along the inner wall surface of the mold, the fiber direction is less likely to be biased in the direction of the sides of the outer shape of the chopped materials, and the variation in the mechanical properties of the molded body 7 is reduced.

When comparing the coefficients of variation of the relative tensile strength between Example 1 and Comparative Example 1, that of Comparative Example 1 was equal to or less than that of Example 1. From this, it is presumed that when the length of one side of the square of the outer shape of the chopped materials is 5 mm, the small size of the outer shape of the chopped materials makes it difficult for the influence of the fiber direction of the chopped materials to become apparent, and the variation in the mechanical properties of the molded bodies 7 and 107 was small in both Example 1 and Comparative Example 1.

It should be noted that in the comparison from Comparative Example 2 to Example 2 and from Comparative Example 3 to Example 3, the mean value of the relative tensile strength decreased. The reason why the mean value of the relative tensile strength is large in Comparative Examples 2 and 3 is presumed to be that, for example, the sides of the outer shape of the chopped materials become oriented along the inner wall surface of the mold, causing the fiber direction along the tensile direction to be dominant in the test pieces 108, which increases the relative tensile strength and raises the mean value. Therefore, it is presumed that the fact that the mean values of the relative tensile strength in Examples 2 and 3 were smaller than those in Comparative Examples 2 and 3, respectively, means that there are many test pieces 8 in Examples 2 and 3 whose relative tensile strength is close to the mean value, and does not simply mean a decrease in relative tensile strength.

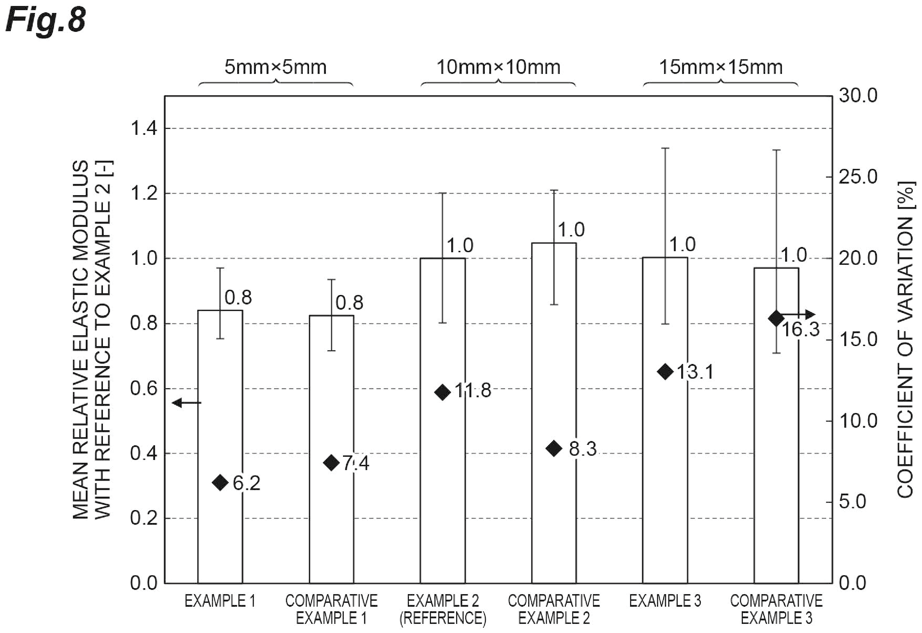

FIG. 8 is a view illustrating the mean value and coefficient of variation of relative elastic modulus based on the results of the in-plane tensile test. In FIG. 8, the mean value of the elastic modulus (relative elastic modulus) with reference to the mean elastic modulus value of Example 2 is shown as a bar graph on the left vertical axis, and the coefficient of variation of the relative elastic modulus is shown as a plot on the right vertical axis. In FIG. 8, the error bars for the examples and comparative examples show the maximum value of the relative elastic modulus at the upper end and the minimum value of the relative elastic modulus at the lower end, respectively.

In FIG. 8, when comparing the coefficients of variation of the relative elastic modulus between Example 1 and Comparative Example 1, and between Example 3 and Comparative Example 3, that of Example 1 was smaller than that of Comparative Example 1, and that of Example 3 was smaller than that of Comparative Example 3. From this, it was found that by mixing approximately equal amounts of chopped materials with orientation directions of 0° and 45°, the variation in elastic modulus is reduced. The reason for this is presumed to be that, for example, even if the sides of the outer shape of the chopped materials become oriented along the inner wall surface of the mold, the fiber direction is less likely to be biased in the direction of the sides of the outer shape of the chopped materials, and the variation in the mechanical properties of the molded body 7 is reduced.

Incidentally, in the comparison from Comparative Example 2 to Example 2, the coefficient of variation of the relative elastic modulus increased. It is conceivable that the coefficient of variation of the relative elastic modulus was accidentally small in Comparative Example 2. For example, there is a possibility that in Comparative Example 2, the fiber direction along the tensile direction was particularly dominant in the test pieces 108, such as the number of test pieces 108 with a fiber direction along the tensile direction being extremely close to 16, and the coefficient of variation of the relative elastic modulus was accidentally calculated to be small. In this case, for example, if a notable bias were to be eliminated by conducting additional tests such as preparing further molded bodies 7 and 107 and further increasing the number of test pieces 8 and 108, it is considered that there is room to reduce the probability that the coefficient of variation (variation) of the relative elastic modulus becomes large by mixing approximately equal amounts of chopped materials with orientation directions of 0° and 45°, even when one side of the square is 10 mm.

### [Modifications]

The present disclosure is not limited to the above-described embodiments and examples.

In the above-described embodiments, the outer shape of the chopped materials 10 and 11 was square as an example, but as another example, it may be rectangular.

In the above-described embodiments, 0° and 45° were exemplified as the orientation directions in the case where the chopped materials include the first chopped materials and the second chopped materials, but the orientation directions are not limited to these. For example, angles such as 30° and 60° may be used. In addition, the orientation direction is not limited to two directions, namely the first direction and the second direction. In addition to the first chopped materials and the second chopped materials, the chopped materials may be prepared so as to include third chopped materials in which the orientation direction is a third direction different from the first direction and the second direction. Similarly, the chopped materials may be prepared so as to include fourth chopped materials, fifth chopped materials, and the like.

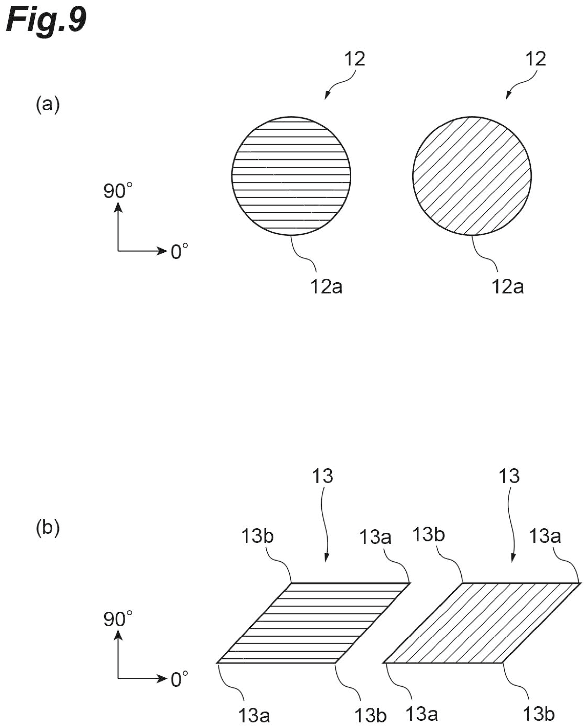

In the above-described embodiments and modifications, the examples were cases where the orientation direction, which is the direction of the reinforcing fibers with reference to the outer shape of the chopped material, was in two or more different directions, but the present disclosure is not limited to these. In the present disclosure, if the outer shape of the chopped material is a specific shape, the orientation direction with reference to the outer shape of the chopped material may be of a single type. The specific shape is a shape that includes an acute angle portion, an obtuse angle portion, or a circular arc portion, and that excludes parallelograms other than a rhombus. For chopped materials having this outer shape, in the preparation process, the chopped materials may be prepared such that the orientation direction, which is the direction of the reinforcing fibers with reference to the outer shape of the chopped material, is of a single type. FIG. 9(a) and FIG. 9(b) are plan views illustrating an example of chopped materials having a specific outer shape that are prepared such that the orientation direction, which is the direction of the reinforcing fibers with reference to the outer shape of the chopped material, is of a single type. As illustrated in FIG. 9(a), the specific outer shape of a chopped material 12 may be, as an example, a circular shape having a circular arc portion 12a. The circular arc portion 12a is a curved portion of the circular shape. The circular arc portion 12a may be a curved portion corresponding to an arbitrary section of the circular shape. As illustrated in FIG. 9(b), the specific outer shape of a chopped material 13 may be a rhombus. The rhombus has, as an example, an acute angle portion 13a and an obtuse angle portion 13b.

Here, "the orientation direction, which is the direction of the reinforcing fibers with reference to the outer shape of the chopped material, is of a single type" means that when the chopped material 12 and the chopped material 13 are rotated or flipped over in a plan view, the outer shapes match and the directions of the reinforcing fibers also match. In this case, the orientation direction is treated as a single type. When chopped materials such as the chopped material 12 and the chopped material 13 are used, since the outer shape includes an acute angle portion 13a, an obtuse angle portion 13b, or a circular arc portion 12a, for example, the portions of the acute angle portion 13a, the obtuse angle portion 13b, or the circular arc portion 12a can take a plurality of orientations along the inner wall surface of the mold.

For example, when the apex of the acute angle portion 13a is in contact with the inner wall surface of the mold, due to rotation of the chopped material about the apex of the acute angle portion 13a, even if the orientation direction is of a single type, the direction of the reinforcing fibers tends to take a more diverse range of directions in accordance with the rotation about the apex of the acute angle portion 13a, compared to a square or rectangular shape having only right-angle portions. The same applies to the case where the apex of the obtuse angle portion 13b is in contact with the inner wall surface of the mold, and the case where an arbitrary point on the circular arc portion 12a is in contact with the inner wall surface of the mold. Also, even in the case where the acute angle portion 13a, the obtuse angle portion 13b, or the circular arc portion 12a is not in contact with the inner wall surface of the mold, the same is considered to apply in the case where the circular arc portions 12a of adjacent chopped materials 12 are in contact with each other, in the case where the acute angle portion 13a of another chopped material 13 is in contact with one side of an adjacent chopped material 13, or in the case where the obtuse angle portion 13b of another chopped material 13 is in contact with one side of an adjacent chopped material 13. Therefore, the orientations of the chopped material 12 and the chopped material 13 with respect to the inner wall surface of the mold become diverse, and the reinforcing fiber direction is less likely to be biased compared to, for example, the case of using a rectangular chopped material, among rectangular shapes in which the reinforcing fiber direction is of a single type in the longitudinal direction.

In addition, for the chopped material 13 having a rhombus outer shape and an orientation direction of a single type of 0°, the fiber length can also be made uniform. For example, in chopped materials having a rectangular or square outer shape and two or more orientation directions, the fiber length of the reinforcing fibers in the outer shape of the chopped material may be longer in some portions and shorter in other portions depending on the orientation direction. Specifically, in a rectangular or square chopped material, if the orientation direction is 0°, the fiber length is equal to one side of the rectangle or square, but if the orientation direction is parallel to the diagonal, the fiber length becomes longer as it gets closer to the diagonal of the rectangle or square, and shorter as it gets farther from the diagonal of the rectangle or square. In contrast, for the chopped material 13 having a rhombus outer shape and an orientation direction parallel to one side of the rhombus, the fiber length of the reinforcing fibers in the outer shape is uniformly equal to one side of the rhombus, and there are no longer or shorter portions. In this way, by using the chopped material 13 having a rhombus outer shape and an orientation direction parallel to one side of the rhombus, when diversifying the orientation direction of the reinforcing fibers with respect to the mold, it is possible to omit the process of mixing chopped materials with two or more orientation directions, and it is also possible to suppress the fiber length of the reinforcing fibers in the outer shape of the chopped material from being partially shortened depending on the orientation direction. Furthermore, since a rhombus has all four sides of equal length, the synergistic effect of such uniformization of the fiber length and the effect of making the reinforcing fiber direction less likely to be biased can further suppress the variation in the mechanical properties of the molded body.

In this way, in the method of manufacturing a molded body using the chopped materials 12 and 13, the chopped materials 12 and 13 prepared in the preparation process have an orientation direction, which is the direction of the reinforcing fibers with reference to the outer shape of the chopped materials 12 and 13, of a single type. The outer shape of the chopped materials 12 and 13 is a shape that includes an acute angle portion 13a, an obtuse angle portion 13b, or a circular arc portion 12a, and that excludes parallelograms other than a rhombus. This makes it easier for the direction of the reinforcing fibers with reference to the mold to take a plurality of different directions depending on the orientation of the acute angle portion 13a, the obtuse angle portion 13b, or the circular arc portion 12a with respect to the mold. Therefore, it becomes less likely that accidental variation in the distribution of the fiber direction occurs when the chopped materials 12 and 13 are laid out in a mold. Accordingly, it is possible to reduce the probability that variation in the mechanical properties of a molded product becomes large due to accidental variation occurring in the distribution of the fiber direction when the chopped materials 12 and 13 are laid out in a mold.

The outer shape including an acute angle portion is not limited to a rhombus. For example, it may be a triangle, or a star shape such as a five-pointed star or a twelve-pointed star. The outer shape including an obtuse angle portion is not limited to a rhombus. For example, it may be a polygon excluding parallelograms, such as a regular pentagon or a regular octagon. The outer shape including a circular arc portion is not limited to a circular shape. For example, it may be a semicircle or a sector. The circular arc portion may be the curved portion of a semicircle or a sector. The circular arc portion may be the curved portion of a shape in which corners form curves, such as a puzzle piece.

A thermoplastic resin was exemplified as the matrix material, but a thermosetting resin may also be used as the matrix material. Examples of thermosetting resins include epoxy, phenol, vinyl ester, unsaturated polyester, cyanate ester, BMI, polyimide, and the like. In addition, carbon, ceramics, or metal may also be used as the matrix material. In addition, carbon fibers were exemplified as the reinforcing material, but the reinforcing material is not limited to this. For example, inorganic fibers such as glass fibers, boron fibers, or silicon carbide fibers may be used, or organic fibers such as aramid fibers, polyarylate fibers, PBO fibers, or high-strength polyethylene fibers may be used.

The method of manufacturing a molded body has been described using the BMC-CTT method as an example, but the method of manufacturing a molded body is also applicable to the SMC-CTT method. In this case, for example, the chopped materials may be arranged and laminated on a surface plate or the like manually or using a mechanical device or the like, the chopped materials may be welded together to form a preliminary laminate, and this may be cut into a predetermined shape and stacked and loaded into a mold to form a pre-molding laminate.

As described above, according to the present disclosure, it is possible to reduce the probability that variation in the mechanical properties of a molded product becomes large due to accidental variation occurring in the distribution of the fiber direction when chopped materials are laid out in a mold. This suppresses the difficulty in designing products using chopped materials and suppresses the limitation of applications of products using chopped materials. That is, it is possible to expand the range of applications of products using chopped materials. In addition, in the case where the chopped materials are prepared by cutting out a scrap material of a prepreg into the predetermined outer shape, effective utilization of the scrap material of the prepreg can be achieved. Therefore, it is possible to contribute to Goal 12 of the Sustainable Development Goals (SDGs), "Ensure sustainable consumption and production patterns."

It should be noted that the constituent elements of various aspects of the present disclosure are described below.
[1] A method of manufacturing a molded body, the method including:
   a preparation process of preparing chopped materials that contain reinforcing fibers and are cut out into a predetermined outer shape;
   an arrangement process of arranging the chopped materials in a mold; and
   a molding process of obtaining a molded body from the chopped materials arranged in the mold by molding accompanied by heating and pressurization,
   wherein, in the preparation process, the chopped materials are prepared so as to include
      first chopped materials in which an orientation direction, which is a direction of the reinforcing fibers with reference to the outer shape of the chopped material, is a first direction, and
      second chopped materials in which the orientation direction is a second direction different from the first direction with reference to the outer shape.
[2] The method of manufacturing a molded body according to [1],
   wherein the outer shape is square or rectangular, and
   wherein in the arrangement process, the chopped materials are arranged in the mold with a ratio of the first chopped materials to the second chopped materials being approximately 1:1.
[3] The method of manufacturing a molded body according to [1],
   wherein the outer shape is square, and
   wherein a lower limit of a length of one side of the square is 5 mm.
[4] The method of manufacturing a molded body according to any one of [1] to [3],
   wherein in the preparation process, the chopped materials are prepared by cutting out, into the predetermined outer shape, a laminated prepreg in which a plurality of prepregs are laminated so as to include a plurality of orientation directions.
[5] The method of manufacturing a molded body according to any one of [1] to [4],
   wherein in the preparation process, the chopped materials are prepared by cutting out a scrap material of a prepreg into the predetermined outer shape.
[6] A method of manufacturing a molded body, the method including:
   a preparation process of preparing chopped materials that contain reinforcing fibers and are cut out into a predetermined outer shape;
   an arrangement process of arranging the chopped materials in a mold; and
   a molding process of obtaining a molded body from the chopped materials arranged in the mold by molding accompanied by heating and pressurization,
   wherein the outer shape is a shape that includes an acute angle portion, an obtuse angle portion, or a circular arc portion, and that excludes parallelograms other than a rhombus, and
   wherein in the preparation process, the chopped materials are prepared such that an orientation direction, which is a direction of the reinforcing fibers with reference to the outer shape of the chopped material, is of a single type.

### Reference Signs List

- 1, 2: Prepreg
- 4: Mold
- 7: Molded body
- 10: Chopped material (first chopped material)
- 11: Chopped material (second chopped material)
- 12, 13: Chopped material
- 12a: Circular arc portion
- 13a: Acute angle portion
- 13b: Obtuse angle portion

## Claims

1. A method of manufacturing a molded body, the method comprising:
a preparation process of preparing chopped materials that contain reinforcing fibers and are cut out into a predetermined outer shape;
an arrangement process of arranging the chopped materials in a mold; and
a molding process of obtaining a molded body from the chopped materials arranged in the mold by molding accompanied by heating and pressurization,
wherein, in the preparation process, the chopped materials are prepared so as to include
first chopped materials in which an orientation direction, which is a direction of the reinforcing fibers with reference to the outer shape of the chopped material, is a first direction, and
second chopped materials in which the orientation direction is a second direction different from the first direction with reference to the outer shape.

2. The method of manufacturing a molded body according to claim 1,
wherein the outer shape is square or rectangular, and
wherein in the arrangement process, the chopped materials are arranged in the mold with a ratio between the first chopped materials and the second chopped materials being set to approximately equal.

3. The method of manufacturing a molded body according to claim 1,
wherein the outer shape is square, and
wherein a lower limit of a length of one side of the square is 5 mm.

4. The method of manufacturing a molded body according to claim 1 or 2,
wherein in the preparation process, the chopped materials are prepared by cutting out, into the predetermined outer shape, a laminated prepreg in which a plurality of prepregs are laminated so as to include a plurality of orientation directions.

5. The method of manufacturing a molded body according to claim 1 or 2,
wherein in the preparation process, the chopped materials are prepared by cutting out a scrap material of a prepreg into the predetermined outer shape.

6. A method of manufacturing a molded body, the method comprising:
a preparation process of preparing chopped materials that contain reinforcing fibers and are cut out into a predetermined outer shape;
an arrangement process of arranging the chopped materials in a mold; and
a molding process of obtaining a molded body from the chopped materials arranged in the mold by molding accompanied by heating and pressurization,
wherein the outer shape is a shape that includes an acute angle portion, an obtuse angle portion, or a circular arc portion, and that excludes parallelograms other than a rhombus, and
wherein in the preparation process, the chopped materials are prepared such that an orientation direction, which is a direction of the reinforcing fibers with reference to the outer shape of the chopped material, is of a single type.
